# EUROPEAN PATENT SPECIFICATION

(11) **EP 4 544 147 B1**
(45) Date of publication and mention of the grant of the patent: **04.03.2026**
(21) Application number: 23745057.2
(22) Date of filing: 21.06.2023
(51) Int. Cl.: E21B 17/01, B63B 35/03, E21B 19/00, F16L 1/18, F16L 1/20, F16L 1/24

(54) **IMPROVING FATIGUE RESISTANCE OF STEEL CATENARY RISERS**
VERBESSERUNG DER ERMÜDUNGSBESTÄNDIGKEIT VON STAHLSEILSTEIGROHREN
AMÉLIORATION DE LA RÉSISTANCE À LA FATIGUE DE RISERS CATÉNAIRES EN ACIER

(30) Priority: 22.06.2022 GB 202209180
(43) Date of publication of application: 30.04.2025
(73) Proprietor: Subsea 7 Do Brasil Serviços Ltda., 24050-090 Niterói - RJ (BR)
(72) Inventor: ASGARI, Peyman, 22280-030 Rio de Janeiro - RJ (BR); DE MORAES TAKAFUJI, Fernanda Cristina, São Paulo - SP (BR); RAMIRO AMORIM, Andre, 22795-165 Rio de Janeiro - RJ (BR); KARUNAKARAN, Daniel, 4056 Tananger (NO)
(74) Representative: Keltie LLP
(86) International application number: PCT/BR2023/050205
(87) International publication number: WO 2023/245268

(56) References cited:
- WO-A2-2011/028432
- AU-A1- 2019 262 192
- GB-A- 2 592 271
- GB-A- 2 593 510
- TECHNOLOGY SUBSEA ET AL: "MASTER'S THESIS Study program/Specialization", 15 June 2019 (2019-06-15), XP093074129, Retrieved from the Internet <URL:https://uis.brage.unit.no/uis-xmlui/bitstream/handle/11250/2621173/Vesga_Jeison.pdf?sequence=1&isAllowed=y> [retrieved on 20230816]

## Description

This invention relates to subsea risers as used in the offshore oil and gas industry to convey hydrocarbons and sometimes other fluids and data from the seabed to the surface. Risers may also be used reciprocally to convey other fluids, power and data from the surface to the seabed. The invention is particularly concerned with catenary risers of rigid steel pipe that are apt to be installed by the reel-lay method.

Various riser configurations are known, including those known in the art as free-hanging, steep, lazy wave and weight-distributed risers. The riser is typically suspended between a floating upper support and the seabed, the support being a surface facility such as a platform or an FPSO (floating production, storage and offloading) vessel.

A riser moves in multiple directions on various timescales and frequencies throughout its operational life. Motion of the riser is driven by multiple inputs, notably: motion of the floating upper support expressed as heave, pitch, roll and yaw; seawater motion caused by currents, tides and waves, including flows that promote vortex-induced vibration (VIV); and pipeline motion across the seabed, known in the art as walking. Repetitive or oscillatory motion generates fatigue in a riser that may, over time, cause its failure and rupture.

A common free-hanging riser comprises a rigid pipe that hangs freely as a catenary from a floating upper support. Most conventionally, such a riser is of steel, hence being known in the art as a steel catenary riser or SCR. SCRs have been used around the world for more than fifty years to transport oil and gas between the seabed and surface facilities. The SCR is a field-proven solution that offers lower CAPEX and OPEX than other riser options.

Those skilled in the art know that nominally rigid pipes are not devoid of flexibility. Indeed, SCRs exploit the bending behaviour of rigid pipes in the elastic domain. However, whilst they have flexibility, 'rigid' pipes do not fall within the definition of 'flexible' pipes as understood in the art.

Conventional rigid pipes used in the subsea oil and gas industry are specified in the American Petroleum Institute (API) Specification 5L and Recommended Practice 1111. A rigid pipe usually consists of, or comprises, at least one pipe of solid steel or steel alloy. However, additional layers of other materials can be added, such as an internal liner layer or an outer coating layer. A rigid pipe may also have a concentric pipe-in-pipe (PiP) structure. Rigid pipe joints are terminated by a bevel, a thread or a flange, and are assembled end-to-end by welding, screwing or bolting them together to form a pipe string or pipeline.

The allowable in-service deflection of rigid pipe is determined by the elastic limit of steel, which is around 1% bending strain. Exceeding this limit caused plastic deformation of the steel. It follows that the minimum bend radius or MBR of rigid pipe used in the subsea oil and gas industry is typically around 100 to 300 metres. However, slight plastic deformation can be recovered or rectified by mechanical means, such as straightening. Thus, during reel-lay installation of a rigid pipeline made up of welded rigid pipes, the rigid pipeline can be spooled on a reel with a typical radius of between 8 and 10 metres. This implies a bending strain above 2% for conventional diameters of rigid pipes, requiring the pipe to be straightened mechanically during unreeling.

Conversely, flexible pipes used in the subsea oil and gas industry are specified in API Specification 17J and Recommended Practice 17B. The pipe body is composed of a composite structure of layered materials, in which each layer has its own function. In particular, bonded flexible pipes comprise bonded-together layers of steel, fabric and elastomer and are manufactured in short lengths in the order of tens of metres. Typically, polymer tubes and wraps ensure fluid-tightness and thermal insulation, whereas steel layers or elements provide mechanical strength.

The structure of a flexible pipe allows a large bending deflection without a significant increase in bending stresses. For example, the MBR of flexible pipe used in the subsea oil and gas industry is typically between 3 and 6 metres. The bending limit of the composite structure is determined by the elastic limit of the outermost plastics layer of the structure, typically the outer sheath, which limit is typically 6% to 7% bending strain. Exceeding that limit causes irreversible damage to the structure.

A simple free-hanging rigid riser such as an SCR has advantages of low cost, a short catenary length and ease of installation. For example, such risers may be installed by conventional pipelaying vessels using well-proven installation techniques such as S-lay, J-lay or reel-lay. However, the tension load at the top of a simple catenary riser increases with depth due to the weight of the riser that is suspended in the water column between the surface and the seabed. Also, a free-hanging rigid riser is particularly susceptible to fatigue-inducing motion being transmitted directly from a floating upper support toward the touch-down point or TDP. There, the riser extends around a sagbend being an upwardly-concave section with increased curvature disposed between the main upper section of the riser and the TDP.

Vessel motion is the primary driver of fatigue-inducing motion in a riser that is freely suspended from a vessel. In dynamic environments that suffer from high sea states, a floating upper support such as an FPSO imparts a large repetitive vertical motion that is transmitted along the riser toward the TDP and so can compromise the integrity of the riser. For example, wave-driven movement of an FPSO may cause dynamic compression-wave pulses to travel downwardly along an attached free-hanging riser, rather like a wave travelling along a whip. Such pulses travel from the top joint connection, where the riser is connected to the FPSO, and down the riser to the TDP. At the TDP, the seabed can reflect the pulses back up the riser in reaction, thereby creating secondary compression waves that can amplify the primary compression waves by constructive interference. If the resulting transient compressive loads reach a critical limit, the structure of the riser can buckle, rupture and collapse.

Thus, a conventional SCR may not be appropriate for use in some environments. This creates a problem because more complex riser systems that meet all technical challenges are much more expensive, especially if they cannot be installed using techniques for which appropriate installation vessels are widely available. Consequently, available riser solutions are not viable for some projects or at least can lead to a substantial increase in the field development cost. For example, one way to address the problem of fatigue would be to use a fully flexible riser made of unbonded flexible pipe. Whilst unbonded flexible pipe can be manufactured in lengths of hundreds of metres, it is very expensive, has limited resistance to pressure and temperature and is of limited diameter and hence flow capacity. It therefore remains strongly preferable to make a riser from rigid steel pipe where possible.

Various approaches can be used to minimise fatigue of an SCR, such as: changing the type of steel alloy (for example using X80 steel, being an API classification of high-strength steel); increasing the thickness of steel along part or all of the length of the riser; anchoring the touch-down point; or decoupling motion between the surface and the SCR.

The most common approach to controlling fatigue is to decouple at least a portion of a riser from the motion of a floating upper support. For example, degrees of freedom may be allowed at the connection between the riser and the support. This approach is used in hybrid risers that effect a flexible connection to the support through a flexible pipe or jumper pipe. However, hybrid risers require a large amount of buoyancy to support the weight of the riser because that weight load is not supported by the surface facility. Sub-surface buoyancy tanks are commonly used but are expensive to make and difficult to handle and to install because of their weight and size. The flexible pipe is also a critical part and is much more expensive than an equivalent length of steel pipe.

BR PI0602675 teaches the addition of a pliant section at a specific location along an SCR. Similarly, the applicant's gimbal joint riser disclosed in WO 2019/051576 proposes another solution to decouple motion of upper and lower sections of a riser. However, both of these solutions require complex bespoke structures to ensure continuity of the riser and mechanical strength and flexibility.

In WO 2006/073887, weights or buoys are added at relevant locations along a riser to modify the dynamic response of the riser to force inputs. BR PI0804577 discloses a combination of anchoring and dynamic decoupling in which a flexible section is present between the floating upper support and a subsurface buoy. In WO 2011/028432, ballast is distributed along the riser. In some cases, typically as disclosed by WO 2008/036728, weights, buoys and anchors are combined to create a lazy wave configuration comprising one or more extra bend sections.

In WO 2011/041860, one or more sections of an SCR are surrounded with hydrodynamic dampers to hinder propagation of compression waves along the riser.

The or each damper section is initially nominally straight or follows the general smooth catenary curvature of the SCR as a whole. When a compression wave propagates, the damper section is deformed into a loop to absorb the compression wave. In other words, the damper section is preferentially deflected laterally at the loop to adopt a smaller radius of curvature than the adjoining undamped sections of the riser.

GB 2593510 describes a residual curvature method applied to a portion of pipeline to mitigate pipeline buckling.

GB 2592271 relates to a method of laying a subsea pipeline. The method comprises launching the pipeline from an installation vessel, and imparting curvature to the pipeline along its length during laying by, for example, a residual curvature method.

AU 2019262192 relates to apparatus and methods for introducing residual curvature to sections of pipeline during S-lay, where the residual curvature is introduced on a lay barge before the selected section reaches the stinger.

The Master's Thesis titled "Feasibility Study of Application of Residual Curvature Method in Deepwater Free Hanging Risers", dated 15 June 2019 and submitted for the Offshore Technology / Marine and Subsea Technology study program at the University of Stavanger by Jeison Leandro Vesga Hernández, describes a residual curvature method applied to steel catenary risers.

The scope of the invention is set out in the independent claims with alternative embodiments as detailed in the dependent claims.

Against this background, the invention resides in a method of installing a steel catenary riser, the method comprising: progressively unspooling and launching the riser into water from a reel-lay vessel; plastically deforming the riser in a straightening process aboard the vessel downstream of unspooling and upstream of launching the riser; adjusting the straightening process to form at least one residual curvature loop of locally increased curvature in a length of the riser that will be suspended in the water above a touch-down point in use; and attaching one or more ballast weights to the at least one loop.

The or each ballast weight may, for example, be attached to a point on the riser after that point has been launched into the water, or before. At least one chain may also, or instead, be suspended from the at least one loop of the riser.

A series of ballast weights is preferably attached to the or each loop. The or each series of ballast weights may extend along a majority of the or each loop but may terminate short of opposed ends of the or each loop. The ballast weights may be equi-spaced from each other along the length of the series. Conversely, one or more buoyancy elements may be attached to the riser above a series of the loops or above the or each loop.

The straightening process may also be used to form upper and lower straighter portions of the riser respectively above and below the or each loop, those straighter portions being of lesser curvature than the or each loop. In some embodiments, the straightening process may be adjusted to form a series of two or more of the residual curvature loops, successive loops of the series being separated and joined by a straighter portion of the riser of lesser curvature than those loops.

In each case, the straightening process may substantially fully straighten the or each straighter portion of the riser. Nevertheless, in the installed riser, the or each straighter portion of the riser can substantially follow a catenary curve that extends to a touch-down point of the riser.

In the installed riser, the loop or loops may be downwardly convex and a vertical clearance between the seabed and the loop, or a lowermost one of the loops, may be less than 5% of the water depth.

Correspondingly, the inventive concept may also be expressed as a steel catenary riser comprising a series of pre-formed portions that are plastically formed to different extents in longitudinal succession along a length of the riser that is suspended in water above a touch-down point. Those portions comprise at least one residual curvature loop of locally increased curvature disposed between straighter portions of lesser curvature than the or each loop, the riser further comprising at least one ballast weight and/or one or more chains attached to the or each loop.

The inventive concept also embraces a subsea installation comprising at least one riser of the invention.

Thus, the invention contemplates a subsea riser comprising a rigid riser pipe that is suspended from a surface support as a catenary extending from the surface support through a sagbend to a seabed touch-down point. The catenary shape of the riser extending between the surface and the seabed is interrupted by at least one deflected section or loop of locally greater curvature than the adjoining sections of the riser above and below. The or each loop departs laterally from the underlying catenary curvature to add axial flexibility to the riser and hence to maximise its fatigue life by absorbing and damping compression and tension motions.

In the invention, the or each loop is pre-formed in the riser by controlling the shape of the pipe wall of the riser itself during straightening, hence changing the curvature with which the pipe is bent along its length. Thus, the locally-deflected discontinuous shape of the riser is intrinsic to the main pipe of the riser itself rather than being imparted to that pipe by means of other structures or attachments only after straightening. This is distinguished from the prior art in which deflected sections of a riser pipe are defined by forces applied locally to the pipe underwater, after straightening, by external influences or attachments such as ballast, buoyancy, anchors, moorings or hydrodynamic dampers.

To impart this intrinsic shape to a riser pipe, the invention employs principles of the 'residual curvature method' (RCM) when installing the riser by a reel-lay method. The RCM, based on the teachings of EP 1358420 and further exploited in WO 2013/126251, was developed as a buckle control technique to create thermal expansion loops in reel-laid subsea pipelines or flowlines. The purpose of the thermal expansion loops is to reduce the longitudinal stiffness of selected portions of the pipeline corresponding to the loops, compared to the longitudinal stiffness of straighter portions of the pipeline disposed between the loops. This ensures that thermal elongation of the pipeline as a whole will occur in a distributed and controlled manner, causing the loops to deflect laterally without generating excessive compressive forces in the pipe wall.

The RCM exploits the conventional straightener system of a reel-lay installation vessel aboard which a pipeline is spooled and transported in a plastically-deformed state as noted above. The pipeline passes through the straightener system, which generally comprises rollers, after being unspooled from a reel or carousel of the vessel. The action of the rollers reverses the plastic deformation that was imparted to the pipeline upon spooling.

In accordance with the RCM, the radius of curvature of the pipeline is modified locally by changing the straightening force that is applied to the pipeline. Typically, the pipeline is under-straightened locally at longitudinal intervals as the pipeline is launched into the sea. Thus, bending stress remains present in some sections of the pipeline. This forms a series of laterally-extending thermal expansion loops of locally increased curvature - that is, with a locally reduced radius of curvature - that are distributed longitudinally along the pipeline between straighter portions of lesser curvature.

The invention arises from the insight that incorporating at least one residual curvature loop fitted with one or more weights can drastically improve the dynamic response of the riser and therefore greatly reduce fatigue. The or each loop may optionally be combined with other known ancillary equipment such as buoys, with the beneficial effect varying depending on the location of such ancillary equipment.

Embodiments of the invention implement a method to install an SCR by the reel-lay method to provide the SCR with improved resistance to fatigue. The method comprises: generating at least one residual curvature loop in the section of a pipeline that will remain permanently above the seabed in the riser; and adding at least one ballast weight on the pipeline section that comprises or constitutes the residual curvature loop.

The or each ballast weight may be added to the pipeline on the lay ramp at a location between the straightener and the water surface, or may be added underwater.

The method may also comprise adding at least one buoy or set of buoys directly above the residual curvature loop or, in the case of two or more residual curvature loops, between or directly above those loops.

Chains may be suspended from ballast weights fixed to residual curvature loop or from the riser itself at the residual curvature loop. In addition to adding weight, chains increase drag resistance to motion of the riser.

The invention proposes a rigid riser solution that enables a free hanging riser configuration to be suspended, or hung off, in deep or ultradeep water from a surface floater that will experience large vertical motions during its operational life. The riser solution requires few modifications and little, if any, extra equipment. The riser of the invention is a free-hanging catenary of steel pipe divided into two sections, or upper and lower risers, by introducing one or more pre-bent segments or loops of the same steel material into a region of the riser close to, but not touching, the seabed. The or each pre-bent loop is formed by the RCM. As noted above, the RCM is a proven technology that is already in use to install flowlines that lie on the seabed. Use of the RCM need not increase the time required to install a riser once the straightener of the installation vessel has been calibrated appropriately.

The invention provides various benefits, enabling a free-hanging riser configuration to be used in deep-water production systems located in harsh environments by reducing dynamic loads around the TDP and, in particular, drastically reducing or avoiding compressive waves reaching the TDP. The invention provides these benefits at a lower cost than available alternative solutions such as steel lazy wave risers (SLWRs). In particular, buoyancy modules cost money, and their installation takes time and costs money too. SLWRs therefore suffer from the cost and logistics involved in procuring, handling and installing the numerous buoyancy modules they require, and the consequential operational risk of dealing with so many lifts and assembly operations aboard the installation vessel.

Nevertheless, the invention may employ a relatively small number of buoyancy modules positioned on the riser above one or more of the residual curvature loops. A pipe end fitting or additional coating thickness may also be applied to the pipeline around the TDP to improve fatigue life.

RCM has been proposed for the installation of SCRs on a theoretical, academic basis. Specifically, *https:*//*pantheon.ufrj.br*/*bitstream*/*11422*/*12728*/*1*/*AndreRamiroAmorim-min.pdf* is a link to a Masters Degree dissertation entitled *Study of the Residual Curvature Applied to a Rigid Riser Under Dynamic Compression in Free Hanging Configuration.* The dissertation was presented in 2018 by one of the inventors of the present invention to COPPE, the engineering institute of the Federal University of Rio de Janeiro. It proposes inserting one loop of residual curvature into an SCR.

Whilst some of the drawings in the dissertation suggest the presence of multiple loops, those loops alternate in opposite lateral directions in the manner of a sinusoidal wave rather than extending in the same lateral direction separated by fully straightened sections of lesser curvature. There is no suggestion of adding weights to the riser, particularly of adding weights to a residual curvature loop.

In summary, a method of installing a steel catenary riser in accordance with the invention comprises progressively unspooling and launching the riser into water from a reel-lay vessel. The riser is plastically deformed in a straightening process aboard the vessel, downstream of unspooling and upstream of launching the riser. The straightening process is adjusted to form at least one residual curvature loop of locally increased curvature in a length of the riser that will be suspended in the water above a touch-down point in use. Ballast weights are then attached to the at least one loop. Buoyancy elements may be attached to the riser above the at least one loop.

In order that the invention may be more readily understood, reference will now be made, by way of example, to the accompanying drawings in which:
Figure 1 is a schematic plan view of a steel catenary riser of the invention being reel-laid from a pipelay vessel that employs an RCM technique to impart locally increased curvature to a portion of the riser subsequently fitted with a set of ballast weights;
Figure 2 is a schematic side view corresponding to Figure 1;
Figure 3 is a schematic side view corresponding to Figure 2 but showing a crane of the vessel adding ballast weights to the riser;
Figure 4 is an enlarged schematic side view of a residual curvature loop in a riser of the invention, showing a series of ballast weights extending along the loop;
Figure 5 is a CAD image of a riser of the invention, again showing a series of ballast weights extending along a residual curvature loop;
Figure 6 is a chart of load and resistance factor design (LRFD) values for the riser shown in Figure 5 subject to a net weight force of from ten to forty-five tonnes, the riser having a thermal insulation coating and a 3LPP coating;
Figures 7a and 7b are charts showing, respectively, LRFD values and compressive forces for a conventional SCR, a riser with a residual curvature loop, a riser with ballast weights and a riser with a combination of ballast weights and a residual curvature loop, in each case with a thermal insulation coating and a 3LPP coating;
Figure 8 is a side view of a variant of the invention in which chains are suspended from the ballast weights;
Figure 9 is an enlarged schematic side view that corresponds to Figure 4 but shows buoyancy modules fixed to the riser above the residual curvature loop; and
Figure 10 corresponds to Figure 2 but shows the riser with more than one residual curvature loop, each loop supporting a respective series of ballast weights;
Figure 11 corresponds to Figure 5 but shows a touch-down portion of the riser that extends across the touch-down point;
Figure 12 is a perspective view of an upset-end pipe that may be incorporated in the touch-down portion of Figure 11;and
Figure 13 is a side view of a riser having one residual curvature loop and a touch-down portion comprising a coating or layer applied to the outer surface of the riser.

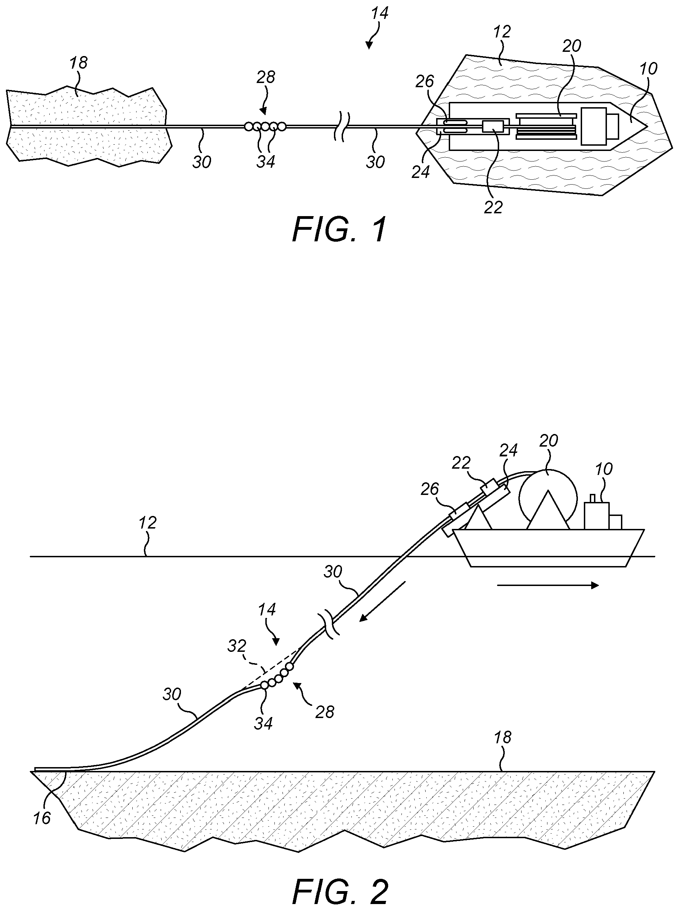

Referring firstly to Figures 1 and 2 of the drawings, which are not to scale, a conventional reel-lay vessel 10 is shown here advancing across the surface 12 of the sea while installing a steel catenary riser 14 extending from the surface 14 to a touchdown point (TDP) 16 on the seabed 18. The riser 14 is nominally rigid, having been fabricated onshore from lengths of steel pipe. However, the riser 14 has sufficient flexibility to bend along its length. This bending deformation remains in the elastic domain provided that an appropriate minimum bending radius (MBR) is observed.

By way of example, the riser 14 may have an inner diameter of eight inches (203.2mm), a wall thickness of one inch (25.4mm) and a top angle of 10° at the floating upper support when fully installed. The riser 14 is apt to be installed in deep to ultradeep water, for example in a water depth of 2100m.

The riser 14 may have a thick coating of thermally insulating material, for example with a thickness of 75mm, or a thinner anti-corrosion coating such as three-layer polypropylene (3LPP) of, typically, 3mm in thickness.

The vessel 10 carries a reel 20, in this example turning about a horizontal axis, onto which the riser 14 is spooled during or after fabrication for transport to the installation site. The bending deformation involved in spooling the riser 14 onto the reel 20 exceeds the MBR and hence the elastic limit, thus imparting plastic deformation to the pipe wall of the riser 14. Consequently, after being unspooled from the reel 20 and before being launched into the sea, the riser 14 is guided through a straightener system 22 that imparts a suitable degree of reverse plastic deformation to the pipe wall.

The straightener system 22 is mounted on an inclined laying ramp 24 that extends over the stern of the vessel 10. The laying ramp 24 also comprises a hold-back system 26 that typically comprises tensioners and clamps for supporting the weight of the riser 14 suspended as a catenary between the vessel 10 and the seabed 18.

In the invention, the straightener system 22 is controlled in accordance with the residual curvature method (RCM), temporarily to reduce the straightening force that imparts reverse plastic deformation to the riser 14. As a result, the riser 14 is under-straightened locally while being launched into the sea. This creates a loop 28 in accordance with the principles set out in EP 1358420 as noted above.

The loop 28 is a portion of the riser 14 whose curvature is increased locally relative to adjoining straighter portions 30 of substantially lesser curvature. In other words, the loop 28 has a substantially smaller radius of curvature than that of the straighter portions 30. Consequently, the straighter portions 30 have a substantially greater radius of curvature than that of the loop 28. Indeed, the radius of curvature of a straighter portion 30 may approach infinity to the extent that the portion 30 is substantially straight.

The straighter portions 30 of the riser 14 extend upwardly and downwardly from the loop 28 as upper and lower portions of the riser 14. Thus, the loop 28 lies between the straighter portions 30 with respect to the length of the riser 14.

The loop 28 aside, the riser 14 follows an underlying conventional catenary path 32 that curves smoothly with progressively increasing curvature approaching the TDP 16. The straighter portions 30 of the riser 14 lie substantially on the underlying path 32 whereas the loop 28 departs laterally or downwardly from the underlying path 32.

Also in accordance with the invention, the loop 28 supports one or more ballast weights 34. The ballast weights could take any suitable form. For example, a hollow metallic buoy could be flooded to become negatively buoyant and therefore to serve as a ballast weight 34.

In this example, as is preferred, a series of ballast weights 34 extends along the loop 28. The series of weights 34 terminates short of the ends of the loop 28 and therefore does not extend onto the straighter portions 30 of the riser 14 above and below the loop 28. However, the series of weights 34 extends along a majority of the arc length of the loop 28. The weights 34 are equi-spaced from each other along the length of the series.

The loop 28 is very close to the seabed 18 relative to the length of the riser 14. For example, the vertical clearance between the seabed 18 and the bottom of the loop 28 or may be less than about 5%, for example 2.75%, of the water depth. Thus, in a water depth of 2100m, the bottom of the loop 28 may be only about 58m above the seabed 18.

In view of the path of the riser 14 from the reel 20, over the laying ramp 24 and through the straightener system 22, the loop 28 is typically upwardly convex in a vertical plane before being launched into the sea. As the riser 14 is lowered toward the seabed 18 and twists about its central longitudinal axis, the loop 28 tilts from its initial orientation to become downwardly convex eventually, hence hanging beneath the underlying catenary path 32 of the riser 14. The loop 28 may then lie in a vertical plane or at an acute angle to either side of the vertical plane.

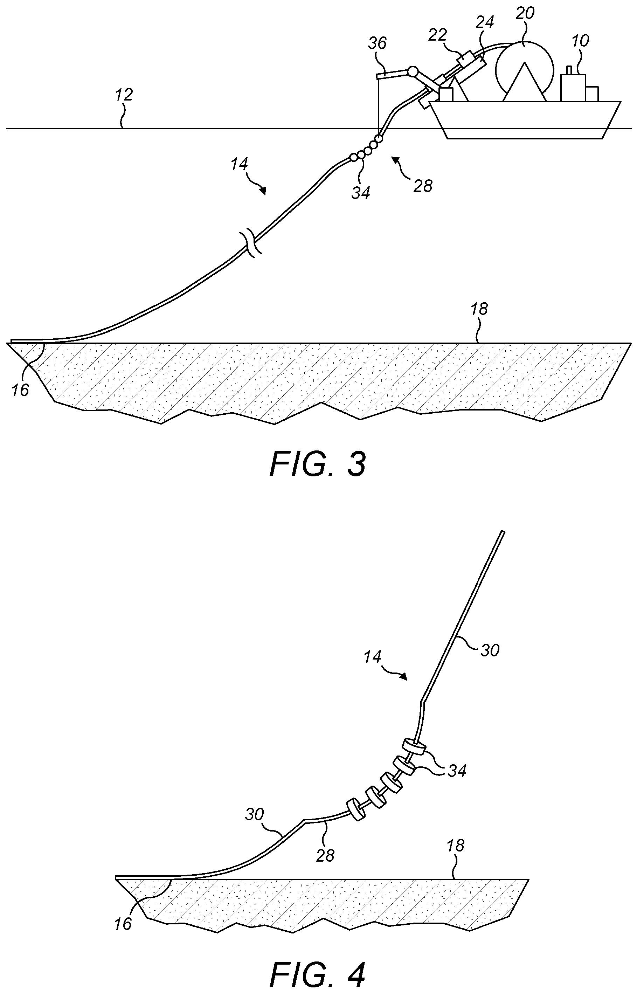

Figure 3 corresponds to Figure 2 but shows the ballast weights 34 being lifted by a crane 36 of the vessel 10 and fixed to the riser 14 before being launched with the riser 14 into the water. The ballast weights 34 are fixed to the riser 14 at any suitable location downstream of the straightener system 22, for example downstream of the hold-back system 26 on the laying ramp 24 or otherwise above or below where the riser 14 enters the water. By way of example, Figure 3 shows a ballast weight 34 being attached to the riser 14 just below the surface 12.

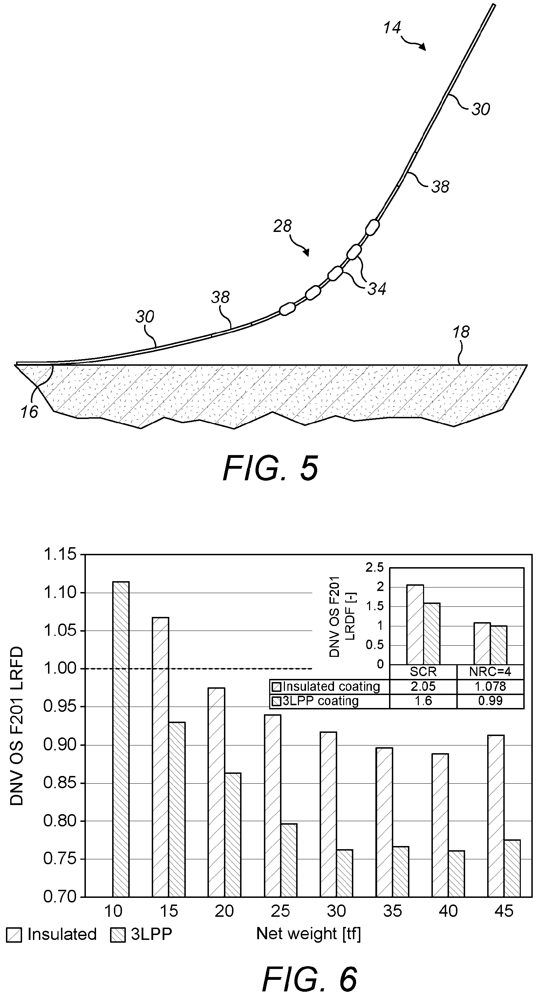

Figures 4 and 5 show a residual curvature loop 28 of the riser 14 in more detail. Unlike the simplified schematic view of Figure 4, the CAD image of Figure 5 shows transition sections 38 that effect a smooth transition of curvature between the straighter portions 30 and the loop 28 that joins them.

Figure 6 shows the beneficial effect of the ballasted residual curvature loop 28 on load and resistance factor design (LRFD) values for the riser 14, relative to LRFD values for a conventional SCR and for a riser with a series of four unballasted loops 28 identified as 'NCR=4', shown inset in Figure 6. LRFD is a design approach based upon a limit state and partial safety factor methodology and is used in the DNV standard relevant to riser systems, namely DNV-ST-F201. In each case, separate LRFD values are shown for risers with a thermal insulation coating and for risers with a 3LPP coating.

It will be apparent from Figure 6 that LRFD values for the riser 14 are beneficially lowered in comparison to the SCR and riser NCR=4 and that the benefit is especially clear for risers 14 with a net ballast weight of at least twenty tonnes. For those risers 14, the LRFD values are below 1 for risers 14 with a thermal insulation coating and for risers 14 with a 3LPP coating. A riser 14 with a 3LPP coating also has an LRFD value below 1 with a net ballast weight of fifteen tonnes.

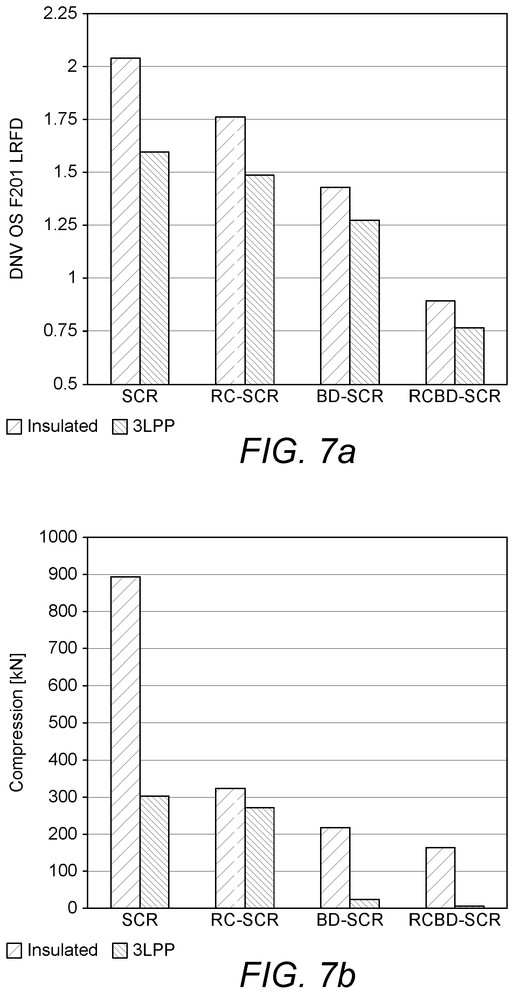

Figures 7a and 7b illustrate dynamic response by showing, respectively, LRFD values and compressive forces for a conventional SCR, a riser 14 with a single residual curvature loop 28 ('RC-SCR'), a riser 14 with a series of ballast weights 34 ('BD-SCR') and a riser 14 with a series of ballast weights 34 on a residual curvature loop 28 ('RCBD-SCR'). In each case shown in Figures 7a and 7b, values are shown for a riser 14 with a thermal insulation coating and with a 3LPP coating.

It will be noted from Figure 7a that the combination of a series of ballast weights 34 with a residual curvature loop 28 ('RCBD-SCR') benefits from an LRFD value below 1 for risers 14 with a thermal insulation coating and for risers 14 with a 3LPP coating. Figure 7b also shows that compressive forces in the riser 14 are minimised by the combination of ballast weights 34 with a residual curvature loop 28, indeed being reduced almost to zero for a riser 14 with a 3LPP coating.

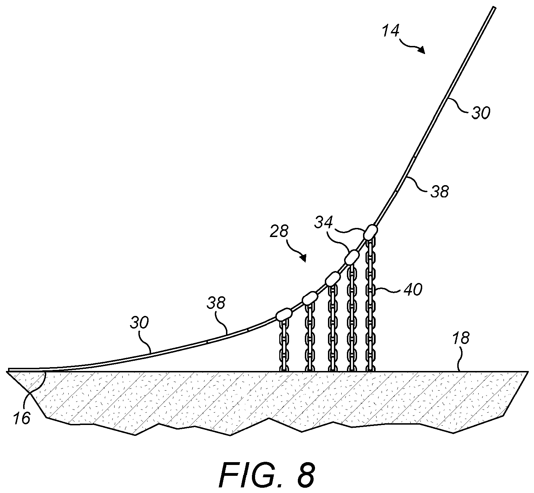

Many variations are possible within the inventive concept. For example, Figure 8 shows a series of chains 40 attached to the riser 14 at the residual curvature loop 28. In this example, the chains 40 are attached to and suspended from respective ballast weights 34 but they could instead be attached directly to the residual curvature loop 28 of the riser 14, hence serving as ballast weights 34 themselves. In addition to contributing ballast, the chains 40 increase drag resistance to motion of the riser.

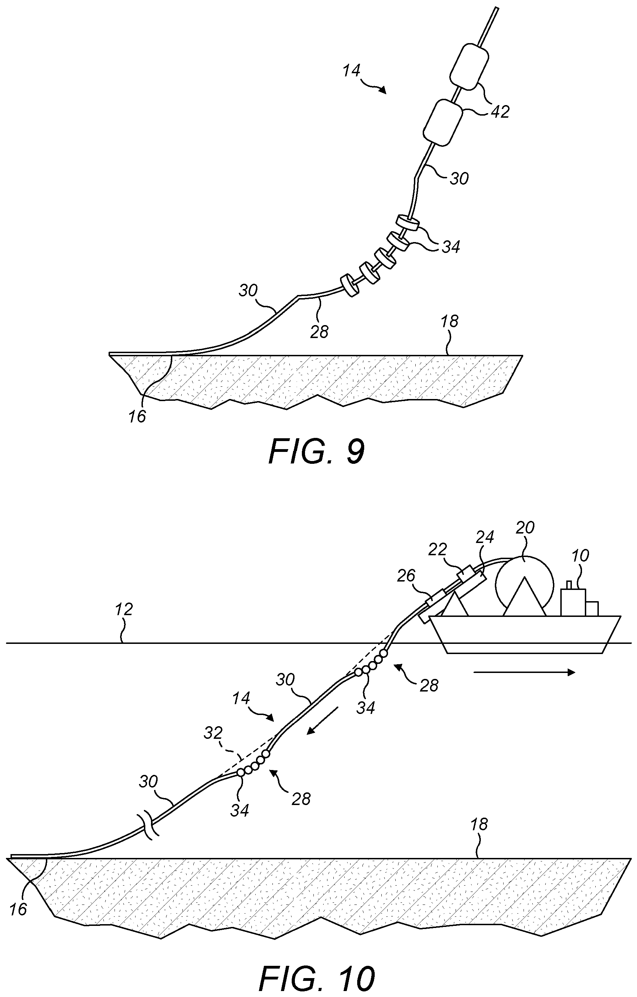

Figure 9 shows another variant in which one or more buoyancy elements, exemplified here by buoyancy modules 42, are disposed on the straighter portion 30 of the riser 14 above the residual curvature loop 28. In this example, a pair of buoyancy modules 42 is provided directly above the loop 28. Any suitable number of buoyancy modules 42 may be used on the riser 14, from one upwards, but significantly fewer buoyancy modules 42 will be required than in SLWRs of the prior art.

Finally, Figure 10 shows a variant in which the straightener system 22 is controlled intermittently or periodically to impart more than one residual curvature loop 28 in the riser 14. In this case, there are two loops 28 in a series but there could be three, four or more such loops 28 in a series along the riser 14, separated in each case by one or more straighter portions 30 of the riser 14. At least one of those loops 28, in this example both or all of the loops 28, carries a respective ballast weight 34 or a series of such weights 34.

Where there is a series of loops 28 as exemplified in Figure 10, each loop 28 may have at least one buoyancy module 34 on the straighter portion 30 of the riser 14 immediately above it. More generally, one or more buoyancy modules 42 may be disposed on the straighter portion 30 between any or all of those loops 28, in addition to or instead of one or more buoyancy modules 42 on the straighter upper portion 30 of the riser 14 above the uppermost loop 28 of the series.

One or more ballast weights 34 could additionally be attached to a straighter lower portion 30 of the riser 14 at a location beneath the residual curvature loop 28 or beneath a series of such loops 28. Similarly, the riser 14 could be moored at that location to a subsea foundation.

In some embodiments, a touch-down portion 44 of the riser 14 includes at least one section that is stiffer than other parts of the riser 14.

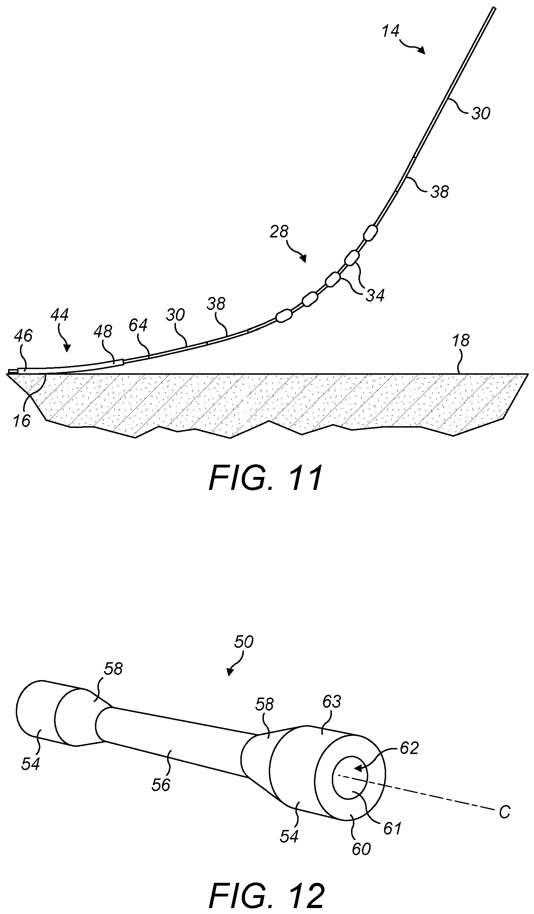

A riser 14 incorporating such a touch-down portion 44 is shown in Figure 11. The touch-down portion 44 extends across the TDP 16, such that a first portion 46 to one side of the TDP 16 rests on the seabed, and a second portion 48 to the other side of the TDP 16 extends to a point along the riser 14 that is suspended in the water column. In this example, the lengths of the first and second portions 46, 48 are substantially equal, but in others they may differ from one another. It should also be noted that the total length of the touch-down portion 44 may differ across embodiments.

The touch-down portion 44 may include at least one upset-end pipe 50, for example of the type described in WO 2008/111828. An example of an upset-end pipe 50 that may be incorporated in the touch-down portion 44 of Figure 11 is shown in isolation in Figure 12.

As will be understood by the skilled person, an upset-end pipe 50 is formed using forging to create thickened end portions 54 through heating and compression. The upset-end pipe 50 of Figure 14 includes thickened end portions 54 that join to a central body 56 via transition portions 58 that taper radially inwardly towards a longitudinal mid-point of the pipe 50. In this way, the outer diameter of each end portion 54 is greater than the outer diameter of the central body 56. Furthermore, the thickness of the wall 60 of each end portion 54 is greater than the thickness of the wall 60 of the central body 56.

The touch-down portion 44 may be formed by joining together a string of upset-end pipes 50 end-to-end, for example using welding. The outermost upset-end pipes 50 located at ends of the touch-down portion 44 may be joined to neighbouring riser pipe sections outside the touch-down portion 44 using welding or any other appropriate technique.

In a riser 14 such as that shown in Figure 11, the outer diameter of the central body 56 of each upset-end pipe 50 of the touch-down portion 44 is substantially equal to the outer diameter of neighbouring sections of the riser 14 outside the touch-down portion 44. As such, the outer diameter of the end portions 54 of each upset-end pipe 50 is greater than the outer diameter of neighbouring sections of the riser 14.

As discussed already, fatigue inducing motion may be transmitted along a riser 14 from a floating support towards and across the TDP 16. For example, wave-driven movement of a floating support may cause dynamic compression-wave pulses to travel downwardly along the riser 14, as well as resulting in periodic impact of the riser 14 against the seabed 18.

Steel catenary risers are known to experience high levels of fatigue in the region at and around the TDP 16 in particular, such that the portion of the riser 14 around the TDP 16 is more susceptible to fatigue-induced damage than other riser portions.

Furthermore, welds between neighbouring pipes of a riser 14 define zones of stress concentration that are more likely to experience failure through fatigue than other portions of the riser 14.

Through the use of upset-end pipes 50 in the touch-down portion 44, the joining welds between pipe sections that generally experience the highest level of fatigue along the riser 14 are made at thickened end portions 54. These thickened end portions 54 are stiffer than surrounding portions of the riser 14, and reduce stresses experienced by the welds in the touch-down portion 44. This reduces the risk of fatigue-induced damage in the touch-down portion 44, thus improving the fatigue resistance of the riser 14 as a whole.

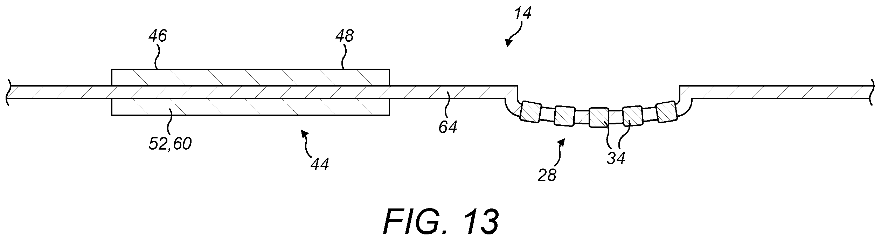

Turning now to Figure 13, in some embodiments the touch-down portion 44 is defined by a length of riser 14 having a thicker wall 60 than sections of the riser 14 outside the touch-down portion 44. This thicker section of wall 60 may be formed, for example, through applying layers or coatings of material 52 to the outer surface 64 of the riser 14, or through use of thicker-walled pipe sections in the touch-down portion 40.

In the example of Figure 13, material 52 is wrapped around the riser 14 to define a wrapped layer or sleeve. In other examples material may be deposited on the outer surface 64 of the riser 14 to form a coating. The thickness of the added material 52 is 10mm in the embodiment of Figure 13, although this thickness may vary. For example, the thickness of the added material layer 52 may be 20mm, 30mm, 40mm or 50mm.

When installed for use, the first portion 46 of the touch-down portion 44 that rests on the seabed to one side of the TDP 16 has a length of 200m in the example of Figure 13, and the second portion 48 that is suspended in the water column has a length of 50m. In other examples the overall length of the touch-down portion 44 may vary, as may the ratio of the lengths of the first and second portions 46, 48.

The thicker and stiffer wall 60 of the riser 14 across the touch-down portion 44 reduces fatigue-inducing stresses on the welds between riser pipes of the touch-down portion 44 in a similar manner to the thickened end portions 54 of the upset-end pipes 50 discussed above.

It will be appreciated that the stiffer wall 60 of the riser 14 along some or all of the touch-down portion 44 may be achieved in ways other than those described above. For example, a stiffer steel alloy may be used for pipe sections in the touch-down portion 44, or a stiffer material other than steel may be used. Furthermore, material processing such as heat treatment may be used to alter the mechanical properties, specifically the stiffness, of pipe sections incorporated in the touch-down portion 44.

In some embodiments, the riser 14 may include one or more pipes of titanium or titanium alloy, in particular along the touch-down portion 44 or a residual curvature loop 28. Titanium has a higher strength-to-weight ratio than steel, which allows for use of thicker titanium pipes without increasing the weight of the riser 14.

It will be appreciated that although the touch-down portion 44 has been described with reference to the risers 14 of Figures 11 and 13, such a touch-down portion 44 could be applied to any riser 14 of the invention as defined by the appended claims that follow.

## Claims

1. A method of installing a steel catenary riser (14), the method comprising:
progressively unspooling and launching the riser (14) into water from a reel-lay vessel (10);
plastically deforming the riser (14) in a straightening process aboard the vessel (10) downstream of unspooling and upstream of launching the riser (14);
adjusting the straightening process to form at least one residual curvature loop (28) of locally increased curvature in a length of the riser (14) that will be suspended in the water above a touch-down point (16) in use; and
**characterised by** attaching one or more ballast weights (34) to the at least one loop (28).

2. The method of Claim 1, comprising attaching a series of ballast weights (34) to the or each loop (28).

3. The method of Claim 2, wherein the series of ballast weights (34) terminates short of ends of the or each loop (28).

4. The method of Claim 2 or Claim 3, wherein the series of ballast weights (34) extends along a majority of the or each loop (28).

5. The method of any of Claims 2 to 4, wherein the ballast weights (34) are equi-spaced from each other along the length of the series.

6. The method of any of Claims 2 to 5, further comprising attaching one or more buoyancy elements (42) to the riser (14) above a series of the loops (28).

7. The method of any preceding claim, further comprising attaching one or more buoyancy elements (42) to the riser (14) above the or each loop (28).

8. The method of any preceding claim, comprising adjusting the straightening process to form a series of two or more of the residual curvature loops (28), successive loops (28) of the series being separated and joined by a straighter portion (30) of the riser (14) of lesser curvature than those loops (28).

9. The method of Claim 8, wherein in the installed riser (14), the or each straighter portion (30) of the riser (14) substantially follows a catenary curve that extends to a touch-down point (16) of the riser (14).

10. The method of any preceding claim, wherein the or each loop (28) is downwardly convex in the installed riser (14).

11. A steel catenary riser (14) comprising a series of pre-formed portions that are plastically formed to different extents in longitudinal succession along a length of the riser (14) suspended in water above a touch-down point (16), those portions comprising at least one residual curvature loop (28) of locally increased curvature disposed between straighter portions (30) of lesser curvature than the or each loop (28), **characterised in that** the riser (14) further comprises at least one ballast weight (34) attached to the or each loop (28).

12. The riser (14) of Claim 11, wherein a series of ballast weights (34) is attached to the or each loop (28).

13. The riser (14) of Claim 12, wherein the series of ballast weights (34) terminates short of ends of the or each loop (28).

14. The riser (14) of Claim 12 or Claim 13, wherein the series of weights (34) extends along a majority of the or each loop (28).

15. The riser (14) of any of Claims 12 to 14, wherein the weights (34) are equi-spaced from each other along the length of the series.

16. The riser (14) of any of Claims 11 to 15, further comprising one or more buoyancy elements (42) attached to the riser above the or each loop (28).

17. The riser (14) of any of Claims 11 to 16, comprising a series of two or more of the residual curvature loops (28), successive loops (28) of the series being separated and joined by a straighter portion (30) of the riser (14) of lesser curvature than those loops (28).

18. The riser (14) of Claim 17, wherein the or each straighter portion (30) of the riser (14) substantially follows a catenary curve extending to a touch-down point (16) of the riser (14).

19. The riser (14) of any of Claims 11 to 18, wherein the or each loop (28) is downwardly convex.

20. The riser (14) of any of Claims 11 to 19, comprising a touch-down portion (40) that extends across the touch-down point (16), wherein the riser (14) is stiffer along at least part of the length of the touch-down portion (40) than outside the touch-down portion (40).

21. The riser (14) of Claim 20, wherein a wall (60) of the riser (14) is thicker along at least part of the length of the touch-down portion (40) than in sections of the riser (14) outside the touch-down portion (40).

22. The riser (14) of Claim 21, wherein the touch-down portion (40) comprises at least one upset-end pipe (50).

23. A subsea installation comprising at least one riser (14) of any of Claims 11 to 22.

## Patentansprüche

1. Verfahren zum Installieren einer Stahlseilsteigleitung (steel catenary riser, SCR) (14), wobei das Verfahren Folgendes umfasst:
schrittweises Abrollen und Ausbringen der Steigleitung (14) ins Wasser von einem Rollenverlege-Seefahrzeug (10) aus;
plastisches Verformen der Steigleitung (14) in einem Begradigungsvorgang an Bord des Seefahrzeugs (10) stromabwärts des Abrollens und stromaufwärts des Ausbringens der Steigleitung (14);
Anpassen des Begradigungsvorgangs, um mindestens eine Restkrümmungsschleife (28) mit örtlich erhöhter Krümmung in einer Länge der Steigleitung (14) zu bilden, die im Gebrauch in dem Wasser oberhalb eines Aufsetzpunkts (16) aufgehängt sein wird; und
**dadurch gekennzeichnet, dass** ein oder mehrere Ballastgewichte (34) an der mindestens einen Schleife (28) angebracht werden.

2. Verfahren nach Anspruch 1, umfassend das Anbringen einer Reihe von Ballastgewichten (34) an der oder jeder Schleife (28).

3. Verfahren nach Anspruch 2, wobei die Reihe der Ballastgewichte (34) kurz vor den Enden der oder jeder Schleife (28) endet.

4. Verfahren nach Anspruch 2 oder Anspruch 3, wobei sich die Reihe von Ballastgewichten (34) entlang eines Großteils der oder jeder Schleife (28) erstreckt.

5. Verfahren nach einem der Ansprüche 2 bis 4, wobei die Ballastgewichte (34) entlang der Länge der Reihe gleichmäßig voneinander beabstandet sind.

6. Verfahren nach einem der Ansprüche 2 bis 5, ferner umfassend das Anbringen eines oder mehrerer Auftriebselemente (42) an der Steigleitung (14) oberhalb der Reihe von Schleifen (28).

7. Verfahren nach einem der vorstehenden Ansprüche, ferner umfassend das Anbringen eines oder mehrerer Auftriebselemente (42) an der Steigleitung (14) oberhalb der oder jeder Schleife (28).

8. Verfahren nach einem der vorstehenden Ansprüche, umfassend das Anpassen des Begradigungsvorgangs, um eine Reihe von zwei oder mehr Restkrümmungsschleifen (28) zu bilden, wobei aufeinanderfolgende Schleifen (28) der Reihe durch einen geraderen Abschnitt (30) der Steigleitung (14) mit geringerer Krümmung als jene Schleifen (28) getrennt und verbunden werden.

9. Verfahren nach Anspruch 8, wobei in der installierten Steigleitung (14) der oder jeder geradere Abschnitt (30) der Steigleitung (14) im Wesentlichen einer Kettenlinie folgt, die sich bis zu einem Aufsetzpunkt (16) der Steigleitung (14) erstreckt.

10. Verfahren nach einem der vorstehenden Ansprüche, wobei die oder jede Schleife (28) in der installierten Steigleitung (14) nach unten konvex ist.

11. Stahlseilsteigleitung (14) umfassend eine Reihe von vorgeformten Abschnitten, die in Längsrichtung nacheinander entlang einer Länge der Steigleitung (14), die oberhalb eines Aufsetzpunktes (16) im Wasser aufgehängt ist, in unterschiedlichem Ausmaß plastisch geformt sind, wobei diese Abschnitte mindestens eine Restkrümmungsschleife (28) mit örtlich erhöhter Krümmung umfassen, die zwischen geraderen Abschnitten (30) mit geringerer Krümmung als die oder jede Schleife (28) angeordnet ist, **dadurch gekennzeichnet, dass** die Steigleitung (14) ferner mindestens ein an der oder jeder Schleife (28) angebrachtes Ballastgewicht (34) umfasst.

12. Steigleitung (14) nach Anspruch 11, wobei eine Reihe von Ballastgewichten (34) an der oder jeder Schleife (28) angebracht ist.

13. Steigleitung (14) nach Anspruch 12, wobei die Reihe der Ballastgewichte (34) kurz vor den Enden der oder jeder Schleife (28) endet.

14. Steigleitung (14) nach Anspruch 12 oder Anspruch 13, wobei sich die Reihe von Gewichten (34) entlang eines Großteils der oder jeder Schleife (28) erstreckt.

15. Steigleitung (14) nach einem der Ansprüche 12 bis 14, wobei die Gewichte (34) entlang der Länge der Reihe gleichmäßig voneinander beabstandet sind.

16. Steigleitung (14) nach einem der Ansprüche 11 bis 15, ferner umfassend ein oder mehrere Auftriebselemente (42), die an der Steigleitung oberhalb der oder jeder Schleife (28) angebracht sind.

17. Steigleitung (14) nach einem der Ansprüche 11 bis 16, umfassend eine Reihe von zwei oder mehr Restkrümmungsschleifen (28), wobei aufeinanderfolgende Schleifen (28) der Reihe durch einen geraderen Abschnitt (30) der Steigleitung (14) mit geringerer Krümmung als jene Schleifen (28) getrennt und verbunden sind.

18. Steigleitung (14) nach Anspruch 17, wobei der oder jeder geradere Abschnitt (30) der Steigleitung (14) im Wesentlichen einer Kettenlinie folgt, die sich bis zu einem Aufsetzpunkt (16) der Steigleitung (14) erstreckt.

19. Steigleitung (14) nach einem der Ansprüche 11 bis 18, wobei die oder jede Schleife (28) nach unten konvex ist.

20. Steigleitung (14) nach einem der Ansprüche 11 bis 19, umfassend einen Aufsetzabschnitt (40), der sich über den Aufsetzpunkt (16) hinweg erstreckt, wobei die Steigleitung (14) entlang mindestens eines Teils der Länge des Aufsetzabschnitts (40) steifer ist als außerhalb des Aufsetzabschnitts (40).

21. Steigleitung (14) nach Anspruch 20, wobei eine Wand (60) der Steigleitung (14) entlang mindestens eines Teils der Länge des Aufsetzabschnitts (40) dicker ist als in Sektionen der Steigleitung (14) außerhalb des Aufsetzabschnitts (40).

22. Steigleitung (14) nach Anspruch 21, wobei der Aufsetzabschnitt (40) mindestens ein gestauchtes Endrohr (50) umfasst.

23. Unterwasseranlage mit mindestens einer Steigleitung (14) nach einem der Ansprüche 11 bis 22.

## Revendications

1. Procédé d'installation d'une colonne montante caténaire en acier (14), le procédé comprenant :
de manière progressive, dérouler la colonne montante (14) et la mettre à l'eau à partir d'un navire de pose par déroulage (10) ;
déformer plastiquement la colonne montante (14) par une opération de redressement à bord du navire (10) en aval du déroulage et en amont de la mise à l'eau de la colonne montante (14) ;
régler l'opération de redressement de façon à former au moins une boucle de courbure résiduelle (28) présentant une courbure localement accrue dans une longueur de la colonne montante (14) qui sera suspendue dans l'eau au-dessus d'un point de contact avec le fond (16) durant l'utilisation ; et
**caractérisé par** la fixation d'une ou de plusieurs masses de lestage (34) à l'au moins une boucle (28).

2. Procédé selon la revendication 1, comprenant la fixation d'une série de masses de lestage (34) à la ou chaque boucle (28).

3. Procédé selon la revendication 2, dans lequel la série de masses de lestage (34) se termine un peu avant des extrémités de la ou chaque boucle (28).

4. Procédé selon la revendication 2 ou la revendication 3, dans lequel la série de masses de lestage (34) s'étend le long d'une majeure partie de la ou chaque boucle (28).

5. Procédé selon l'une quelconque des revendications 2 à 4, dans lequel les masses de lestage (34) sont équidistantes les unes des autres le long de la longueur de la série.

6. Procédé selon l'une quelconque des revendications 2 à 5, comprenant, en outre, la fixation d'un ou de plusieurs éléments de flottaison (42) à la colonne montante (14) au-dessus d'une série des boucles (28).

7. Procédé selon l'une quelconque des revendications précédentes, comprenant, en outre, la fixation d'un ou de plusieurs éléments de flottaison (42) à la colonne montante (14) au-dessus de la ou chaque boucle (28).

8. Procédé selon l'une quelconque des revendications précédentes, comprenant le réglage de l'opération de redressement de façon à former une série d'au moins deux des boucles de courbure résiduelle (28), des boucles (28) successives de la série étant séparées et raccordées par une partie plus droite (30) de la colonne montante (14) présentant une courbure moindre relativement à ces boucles (28).

9. Procédé selon la revendication 8, dans lequel, dans la colonne montante (14) installée, la ou chaque partie plus droite (30) de la colonne montante (14) suit sensiblement une courbe caténaire qui s'étend jusqu'à un point de contact avec le fond (16) de la colonne montante (14).

10. Procédé selon l'une quelconque des revendications précédentes, dans lequel la ou chaque boucle (28) est convexe vers le bas dans la colonne montante (14) installée.

11. Colonne montante caténaire en acier (14) comprenant une série de parties préformées, mises en forme plastiquement dans différentes mesures en une succession longitudinale le long d'une longueur de la colonne montante (14) suspendue dans l'eau au-dessus d'un point de contact avec le fond (16), ces parties comprenant au moins une boucle de courbure résiduelle (28) présentant une courbure localement accrue, disposée entre des parties plus droites (30) présentant une courbure moindre relativement à la ou chaque boucle (28), **caractérisée en ce que** la colonne montante (14) comprend, en outre, au moins une masse de lestage (34) fixée à la ou chaque boucle (28).

12. Colonne montante (14) selon la revendication 11, dans laquelle une série de masses de lestage (34) est fixée à la ou chaque boucle (28).

13. Colonne montante (14) selon la revendication 12, dans laquelle la série de masses de lestage (34) se termine un peu avant des extrémités de la ou chaque boucle (28).

14. Colonne montante (14) selon la revendication 12 ou la revendication 13, dans laquelle la série de masses (34) s'étend le long d'une majeure partie de la ou chaque boucle (28).

15. Colonne montante (14) selon l'une quelconque des revendications 12 à 14, dans laquelle les masses (34) sont équidistantes les unes des autres le long de la longueur de la série.

16. Colonne montante (14) selon l'une quelconque des revendications 11 à 15, comprenant, en outre, un ou plusieurs éléments de flottaison (42) fixés à la colonne montante au-dessus de la ou chaque boucle (28).

17. Colonne montante (14) selon l'une quelconque des revendications 11 à 16, comprenant une série d'au moins deux des boucles de courbure résiduelle (28), des boucles (28) successives de la série étant séparées et raccordées par une partie plus droite (30) de la colonne montante (14) présentant une courbure moindre relativement à ces boucles (28).

18. Colonne montante (14) selon la revendication 17, dans laquelle la ou chaque partie plus droite (30) de la colonne montante (14) suit sensiblement une courbe caténaire s'étendant jusqu'à un point de contact avec le fond (16) de la colonne montante (14).

19. Colonne montante (14) selon l'une quelconque des revendications 11 à 18, dans laquelle la ou chaque boucle (28) est convexe vers le bas.

20. Colonne montante (14) selon l'une quelconque des revendications 11 à 19, comprenant une partie de contact avec le fond (40) qui s'étend d'un côté à l'autre du point de contact avec le fond (16), la colonne montante (14) étant plus raide le long d'au moins une partie de la longueur de la partie de contact avec le fond (40) qu'en des endroits autres que la partie de contact avec le fond (40).

21. Colonne montante (14) selon la revendication 20, dans laquelle une paroi (60) de la colonne montante (14) est plus épaisse le long d'au moins une partie de la longueur de la partie de contact avec le fond (40) que dans des sections de la colonne montante (14) autres que la partie de contact avec le fond (40).

22. Colonne montante (14) selon la revendication 21, dans laquelle la partie de contact avec le fond (40) comprend au moins une conduite à extrémités refoulées (50).

23. Installation sous-marine comprenant au moins une colonne montante (14) selon l'une quelconque des revendications 11 à 22.
